# EUROPEAN PATENT APPLICATION

(11) **EP 3 530 841 A1**
(43) Date of publication of application: **28.08.2019**
(21) Application number: 19158933.2
(22) Date of filing: 22.02.2019
(51) Int. Cl.: E04F 15/02, C09J 167/00

(54) **REACTIVATABLE TILE BONDING MAT AND METHOD OF INSTALLING TILE USING A REACTIVATABLE TILE BONDING MAT**

(30) Priority: 23.02.2018 US 201862634724 P; 23.02.2018 US 201862634711 P
(71) Applicant: ARDEX Americas, Aliquippa, PA 15001 (US)
(72) Inventor: Buschman, Bryant, Saint Augustine, FL 32084 (US); Ruch, Danny, Rosebery 2018 NSW (AU); Schröder, Marco, 5955 Lippstadt (DE)
(74) Representative: Patentanwälte Bals & Vogel

(57) **Abstract**

The invention relates to a reactivatable tile bonding mat (2) that requires no cement-based thin-set for installation, the reactivatable tile bonding mat (2) comprising: a top surface (4) and a bottom surface (6), the top surface (4) and the bottom surface (6) including a polymer hot-melt material (8) that is reactivatable after heating and has adhesive and abhesive properties.

## Description

The invention relates to a device and a method for setting, installing, removing, replacing or rearranging tile and stone.

Methods for setting tile and stone are already known from the prior art. Disadvantageously, most of the known methods use cement-based thinset to fix tiles or stones to floors or walls. The use of cement-based thinset not only requires a separate step, but also usually requires a longer drying time. In addition, if tiles or stones are fixed with cement-based thinset, it is typically not possible to remove the tiles without destroying them once they have been fixed. Finally, with regard to the development of environmentally friendly building materials with low CO₂ emissions, there is also an effort to replace cement-based building materials.

Therefore, it is the object of the present invention to provide a device and a method for installing, replacing, removing and rearranging tiles or stones on floors or walls in a simple, inexpensive, and environmentally friendly manner.

The object of the present invention is solved by a reactivatable tile bonding mat with the features of independent claim 1 and methods with the features of claims 13 and 15. Further features and details of the invention are subject matter of the dependent claims, the description and the drawings. According to the invention, features and details which are described in connection with the reactivatable tile bonding mat also apply in connection with the respective method according to the invention and vice versa, such that according to the disclosure of the single aspects of the invention it can always be reciprocally related to.

According to the invention, the reactivatable tile bonding mat serves for setting tile and stone. More particularly, the reactivatable tile bonding mat allows to reduce the amount of cement based thinset for setting tile and stone.

According to the invention, the reactivatable tile bonding mat requires no cement-based thin-set for installation, whereby the reactivatable tile bonding mat comprises: a top surface and a bottom surface, which both include a polymer hot-melt material that is reactivatable after heating and has adhesive and abhesive properties.

Within the scope of the invention, a cement-based thin-set is preferably understood to be a cement layer arranged between a subfloor and tiles or stones, which is used to fix the tiles or stones on the subfloor. In contrast to grout, which is arranged between individual tiles or stones, cement-based thin-set is usually placed directly on the main area of the substrate and the stones or tiles.

In the context of the present invention, the term 'reactivatable' is preferably to be understood as the property to reactivate an active state from an inactive state. With regard to the tile bonding mat, in particular with regard to the polymer hot-melt material, reactivation can preferably be understood to mean the ability to loosen an existing solid bond, for example between a tile and a substrate without destroying material, before entering it again.

Within the scope of the invention the term "adhesive" must be understood as the property of the formation of attractive forces, whereas the term 'abhesive' describes the formation of repulsive forces within the scope of the present invention.

Moreover, within the scope of the invention, it has been recognized that the use of a tile bonding mat in accordance with the invention eliminates the necessity of using cement-based thin-set to bond tiles or stones to a substrate. This not only enables a quick, cost-effective and environmentally friendly method of tile or stone laying, but also reveals a reversible laying method.

According to the invention, the reactivatable tile bonding mat may be producible in the form of a compressible or elastic, at least partially compressible or elastic plate or the like, which may be formed, for example, rectangular or at least partially rectangular. The tile bonding mat may be formed in various, in particular variable sizes and layer thicknesses, preferably in a size between 8 x 13" and 36 x 60" and a layer thickness of at least 1/8". A thickness of 1/8" is expected to allow enough deformation for buttons or square indentations found on the back of common tiles. The inventive mat can be placed directly on the floor that is to be tiled, wherein the mat can be fixed in the corners, by spot heating or the like, in order to suppress shifting of the mat. The tile bonding mat according to the invention can be made of different materials, particularly of a mixture of suitable materials. For example, the tile bonding mat may be formed from a mixture of a polymer such as PET or the like and glass, in particular pulverized windscreen glass. According to the invention, the tile bonding mat may include an epoxy resin or a polyurethane or silane related structure to adhere tile to a substrate like concrete or the like, whereby the tile bonding mat preferably uses the moisture in the air to set hard. Preferably, the mat can also comprise an inner core for holding the tile, preferably in addition to wire mash or screen mash or the like that can be placed within the mixture. Furthermore, advantageously the reactivatable tile bonding mat according to the invention is made of a material, which is resistant against common chemicals, especially towards alkalines.

With regard to a simple and precisely dosable activation, it may be advantageously provided that the adhesive and/or abhesive properties are activated by heat. According to the invention, heat activation can in particular lead to melting or liquefaction of the polymer hot-melt material. A heat activation can be distributed homogeneously along an activatable surface in a constructively simple way, e.g. via a hot-air dryer or the like, whereby temperatures of 220 to 300°C, preferably 250 to 300°C, in particular 290 to 300°C can be used for activation. Such activation temperatures have the advantage that activation cannot be triggered unintentionally, for example by underfloor heating or the like.

In the context of a diverse selection of materials, it may also be advantageously provided that the adhesive and/or abhesive properties being effective towards at least one of the following substrates: concrete, wood, tile, and vinyl. In addition to the above-mentioned substrates, the invented tile bonding mat can also be used on other, preferably all imaginable floors, so that the mentioned adhesive and abhesive properties, for example, can also be effective towards materials such as cork, laminate, marble, granite or the like.

The heat intended to activate the adhesive and abhesive properties can be initiated or generated in different ways, preferably by microwave radiation generated by means of a microwave radiation generator, via induction by means of the generation of an alternating magnetic field induced by alternating current, via heat flow generated, for example, by means of a heat gun or the like, or via heating by current-carrying conductors.

By using heat activation sources, a tile can be easily fixed and removed from a substrate. For example, the reactivatable tile bonding mat can include a lowmelting point polymer or a synthetic material impregnated with graphite or powdered iron or the like. In order to fix the tile, it must be placed on the mat before it can be bonded by heating the mat. In order to heat the mat, preferably a flat pre-printed, electric coil or the like can be affixed to the bottom of the tile, advantageously sandwiched between the tile and the mat. The coil can be optionally imbedded, in a thin, square plastic sheet with single-sided adhesive or can be integrated in the mat. Within the context of a simple activation, an induction heater can be passed over the top of the tile to melt the mat around the coil and form a bond between the floor and the tile once the tile-coil-mat sandwich is properly positioned. The induction heater can be formed and used like a floor buffing machine, that generates a high frequency alternating current. The current can inductively couple with the coil on the bottom of the tile, setting up an alternating current flow through the metal impregnated mat. Thus, the mat would resistively heat and form a permanent bond with the tile and the floor. Additionally, the induction heater can also be used to re-melt the mat and loosen the tile.

In order to ensure a particularly effective and homogeneous distribution of the heat, and thus also a particularly effective activation, it is particularly advantageous, in accordance with the invention, if the top surface and/or the bottom surface comprises a heat receptor. The heat receptor is preferably made of a material with a high thermal conductivity and is distributed as evenly as possible within the upper and/or lower surface. The heat receptor can be formed in one piece or several pieces or for example in the form of flakes or in powdered form.

Within the context of a particularly simple integration and homogeneous distribution of a heat receptor, it advantageously can be intended that the heat receptor is embedded in the polymer hot-melt. The heat receptor or the individual heat receptor particles thereby are particularly intended for heat conduction and preferably can be formed of magnetite, powdered steel or a steel screen mesh or the like.

In order to ensure an evenly flat tile or stone surface and to dampen the forces acting on the tiles or stones, it may also be provided, in accordance with the invention, that the top surface and/or the bottom surface includes a porous material, preferably a melt-bonded polyester that is particularly non-woven and has proven dimensional stability. By means of a surface thus formed, it is in particular possible to provide an adaptable structure for adaptation to the back profiles of tiles by revealing through the structure a kind of cushion into which the tile can be pressed.

For the adjustment and variation of other specific parameters of the tile bonding mat according to the invention, it may also be advantageously provided that the reactivatable tile bonding mat further comprises a filler that is preferably arranged between the top surface and the bottom surface, in particular, the filler being at least one of calcium carbonate, oragonite, silica, metal flake or glass. The filler can also be in the form of a catalyst, such as polyurethane or similar, in order to be able to set and vary a specific setting time or processing time for positioning, laying and relaying of tiles or stones on a substrate. The filler can also be required to additionally conduct and hold heat or for reducing the amount of raw polymer needed and can be present in varying proportions, for example, from 25 to 65%, in particular 55% by weight of the total mass of the polymer hot melt material according to the invention. Additionally, the fillers may also be in the form of pigments for coloring or other additives.

In particular for use in humid environments, the invention may provide that the
top surface and/or the bottom surface of the reactivatable tile bonding mat comprises a hydrophobic material for repelling water.

With regard to a stable and long-lasting connection, the top surface and/or the bottom surface of the reactivatable tile bonding mat according to the invention preferably further comprises a crack suppressant membrane.

In addition, it has proven to be advantageous when the top surface and/or the bottom surface further comprises a notch pattern allowing compression of adhesive and full "set/bond" of tile. In particular, the notch pattern may be adapted to a structure of a tile underside and may, for example, have a regular notch pattern with a notch height of preferably 3/8", a notch width of preferably 1/4" and a spacing between adjacent notches of preferably 1/2".

Another object of the invention is a system for laying tile or stone. The system comprises a tile bonding mat described above and a device for activating the adhesive and/or abhesive properties of the top surface and/or the bottom surface of the reactivatable tile bonding mat. Thus, the system according to the invention has the same advantages as already described in detail with regard to the tile bonding mat according to the invention.

The inventive device for activating the adhesive and/or abhesive properties of the top surface and/or the bottom surface of the reactivatable tile bonding mat can be formed in particular in the form of a microwave generator for generating microwave radiation, an induction heater for generating an alternating magnetic field, a heat gun or hot-air dryer for generating hot air, a voltage source for applying a voltage for generating a heat flow or in the form of any other type of applicable heat source.

Furthermore, another object of the invention is a method of installing tile or stone using a reactivatable tile bonding mat described above. The method comprises the steps of placing the reactivatable tile bonding mat on a flat surface, placing the tile or stone on the reactivatable tile bonding mat, applying heat to the tile or stone on the reactivatable tile bonding mat, and applying grout between sides of the tile or stone. Thus, according to the invention the method has the same advantages as already described in detail with regard to the tile bonding mat and the system comprising the tile bonding mat repeatative to the invention.

With a view to the rapid and precise laying of tiles or stones, the invention may also provide that the method repeatative to the invention comprises the step of applying spacers between the sides of the tile or stone prior to applying heat and/or the step of removing the spacers between the sides of the tile or stone prior to applying grout.

Finally, another object of the invention is a method for replacing, removing or rearranging tile or stone using a reactivatable tile bonding mat as described above. The method comprises the steps of removing grout between sides of the tile or stone, applying heat to the tile or stone on the reactivatable tile bonding mat, replacing, removing or rearranging the tile or stone on the reactivatable tile bonding mat, applying heat to altered tile or stone on the reactivatable tile bonding mat, and applying grout between sides of the tile or stone. Thus, according to the invention this method has the same advantages as already described in detail with regard to the tile bonding mat, the system comprising the tile bonding mat according to the invention as well as the previously described method of installing tile or stone.

Preferably, all features of the claims referring to the reactivatable tile bonding mat can be combined with all features of the system claim as well as with all features of the method claims and vice versa.

Further advantages, features and details of the invention result from the subsequent description in which embodiments of the invention are described in detail in accordance with the drawings. Thereby, the features described in the claims and in the description can be essential for the invention both single or in any combination.

It is shown:
- Fig. 1: a schematic view of a tile bonding mat according to the invention in a first embodiment,
- Fig. 2a: a schematic view of a system for setting tile and stone comprising a tile bonding mat according to the invention in a first embodiment in an inactivated state,
- Fig. 2b: a schematic view of the system according to figure 2a in an activated state,
- Fig. 3: a schematic view of the topside of a tile bonding mat according to the invention in a second embodiment,
- Fig. 4: a schematic view of the individual steps of a method of installing tile or stone using a reactivatable tile bonding mat according to the invention,
- Fig. 5: a schematic view of the individual steps of a method for installing, replacing, removing or rearranging tile or stone using a reactivatable tile bonding mat according to the invention.

The accompanying drawings, where like reference numerals refer to identical or functionally similar elements throughout the separate views, together with the detailed description below, are incorporated in and form part of the specification and serve to further illustrate embodiments of concepts that include the claimed disclosure and explain various principles and advantages of those embodiments.

In the following description, for purposes of explanation, numerous specific details are set forth in order to provide a thorough understanding of the disclosure. It will be apparent, however, to one skilled in the art, that the disclosure may be practiced without these specific details. In other instances, structures and devices are shown in block diagram form in order to avoid obscuring the disclosure.

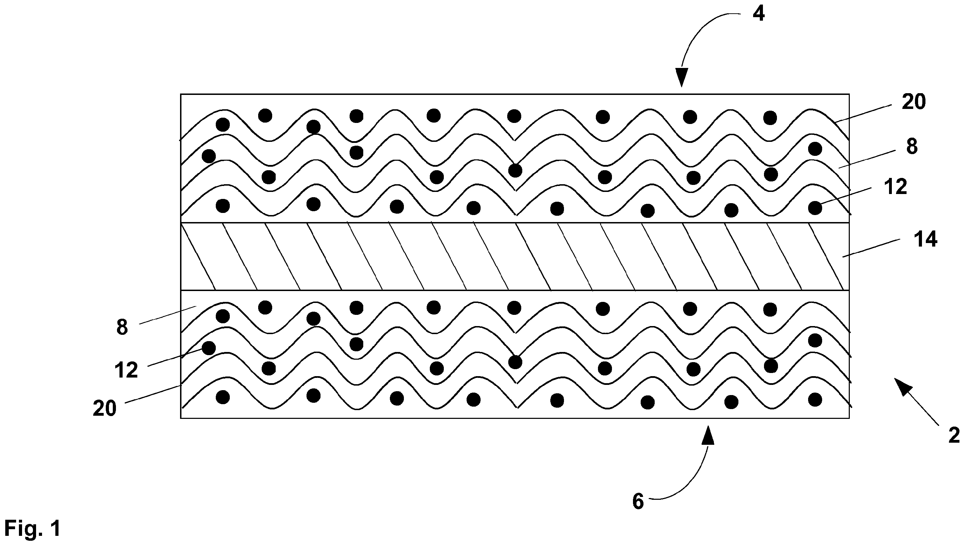

Fig. 1 shows a schematic view of a tile bonding mat 2, according to the invention, in a first embodiment.

The reactivatable tile bonding mat 2, according to the invention, requires no cement-based thin-set for installation and comprises a top surface 4 and a bottom surface 6, the top surface 4 and the bottom surface 6 including a polymer hot-melt material 8 that is reactivatable after heating and has adhesive and abhesive properties.

The adhesive and/or abhesive properties can be activated by heat, whereby heat activation in particular can lead to melting or liquefaction of the polymer hot-melt material 8. A heat activation can be distributed homogeneously along an activatable surface e.g. via a hot-air dryer or the like, whereby temperatures of 220 to 300°C, preferably 250 to 300°C, in particular 290 to 300°C can be used for activation. Such activation temperatures have the advantage that activation cannot be triggered unintentionally, for example by underfloor heating or the like.

The adhesive and/or abhesive properties which can be activated by heat can be particularly effective towards substrates 10, like concrete, wood, tile, or vinyl or preferably all other imaginable floors, so that the mentioned adhesive and abhesive properties can also be effective towards materials such as cork, laminate, marble, granite or the like.

The heat intended to activate the adhesive and abhesive properties can be initiated or generated in different ways; for example by microwave radiation, via induction, via heat flow, or via heating by current-carrying conductors.

In order to ensure a particularly effective and homogeneous distribution of the heat, and thus also a particularly effective activation, the top surface 4 and/or the bottom surface 6 comprises a heat receptor 12, which is made of a material with a high thermal conductivity and is distributed as evenly as possible within the top and/or bottom surface 4, 6. The heat receptor 12 can be formed in one piece or as shown in several pieces or for example in the form of flakes or in powdered form.

Within the context of a particularly simple integration and homogeneous distribution of a heat receptor 12, it advantageously can be intended that the heat receptor 12 is embedded in the polymer hot-melt 8. The heat receptor 12 or the individual heat receptor 12 particles thereby are particularly intended for heat conduction and preferably can be formed of magnetite, powdered steel or a steel screen mesh or the like.

In order to ensure an evenly flat tile or stone surface and to dampen the forces acting on the tiles 22 or stones 22', it may also be provided, in accordance with the invention, that the top surface 4 and/or the bottom surface 6 includes a porous material 20, preferably a melt-bonded polyester that is particularly non-woven and has proven dimensional stability. By means of a surface thus formed, it is in particular possible to provide an adaptable structure for adaptation to the back profiles of tiles 22 by revealing through the structure a kind of cushion into which the tile 22 can be pressed.

For the adjustment and variation of other specific parameters of the tile bonding mat 2 according to the invention, it may also be advantageously provided that the reactivatable tile bonding mat 2 further comprises a filler 14 that is preferably arranged between the top surface 4 and the bottom surface 6 as shown. The filler can be made of calcium carbonate, oragonite, silica, metal flake or glass or the like, or in form of a catalyst, such as polyurethane or similar that can help to set and vary a specific setting time or processing time for positioning, laying and relaying of tiles 22 or stones 22' on a substrate 10. The filler 14 can also be required to additionally conduct and hold heat or for reducing the amount of raw polymer needed and can be present in varying proportions.

In addition to the possible optional additional components, the top surface 4 and/or the bottom surface 6 of the reactivatable tile bonding mat 2 can also comprise a hydrophobic material for repelling water and/or a crack suppressant membrane.

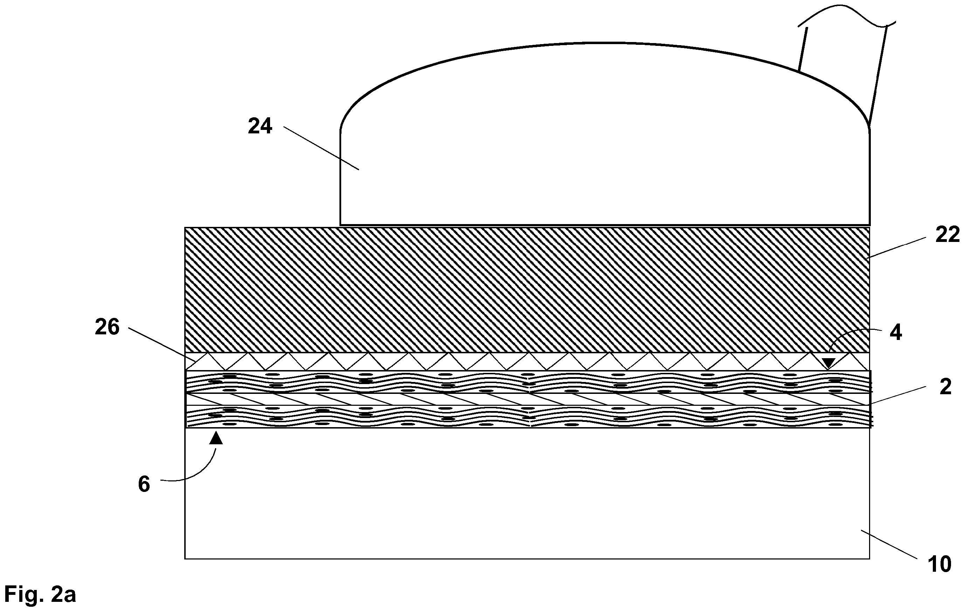

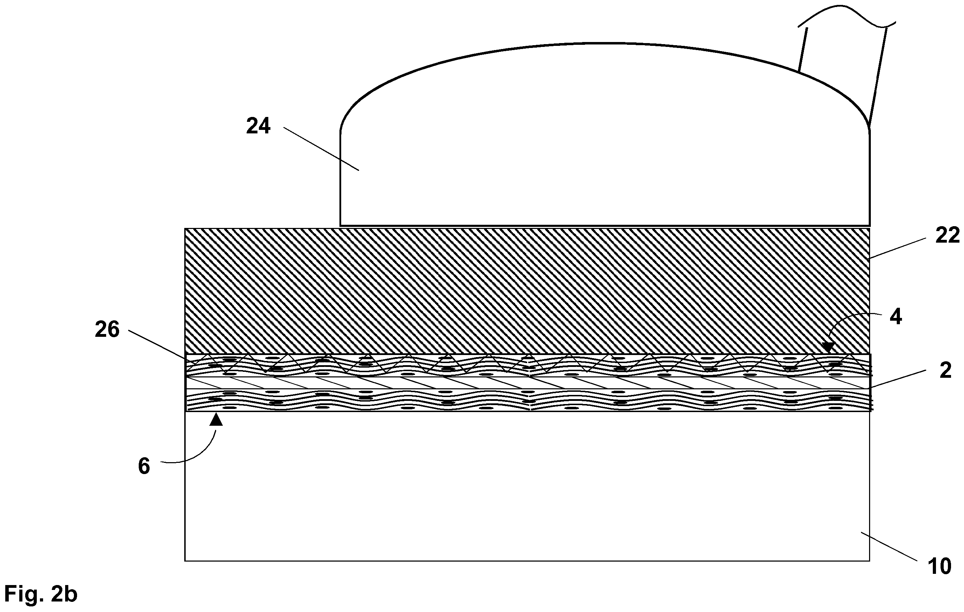

Fig. 2a and b show a schematic view of a system 1 for setting tile 20 and stone 22' comprising a tile bonding mat 2 according to the invention in a first embodiment in both an inactivated as well as an activated state, respectively. The system 1 comprises a tile bonding mat 2 described above and a device 24 for activating the adhesive and/or abhesive properties of the top surface 4 and/or the bottom surface 6 of the reactivatable tile bonding mat 2. The device 24 is designed in the form of an induction heater, which can be used like a buffering machine or the like and which generates high frequency alternating current.

In order to heat the mat 2, additionally a flat pre-printed, electric coil 26 is affixed to the bottom of the tile 22, sandwiched between the tile 22 and the mat 2. The coil 26 can be optionally imbedded, in a thin, square plastic sheet with single-sided adhesive or can be integrated in the mat 2.

In order to heat the mat 2, the induction heater 24 is passed over the top of the tile 22 to melt the mat 2 around the coil 24 and form a bond between the floor 10 and the tile 22 once the tile-coil-mat sandwich is properly positioned. The generated current can inductively couple with the coil 24 on the bottom of the tile 22, setting up an alternating current flow through the metal impregnated (receptor 12) mat 2. Thus, after generating the heat, the mat 2 would resistively heat and form a permanent bond with the tile 20 and the floor 10, as can be seen in Fig. 2b. The induction heater 24 can also be used to re-melt the mat 2 and loosen the tile 22.

As an alternative to an induction heater, the device 24 for activating the adhesive and/or abhesive properties of the top surface 4 and/or the bottom surface 6 of the reactivatable tile bonding mat 2 can be formed using a microwave generator for generating microwave radiation, a heat gun or hot-air dryer for generating hot air, a voltage source for applying a voltage for generating a heat flow or in the form of any other type of applicable heat source.

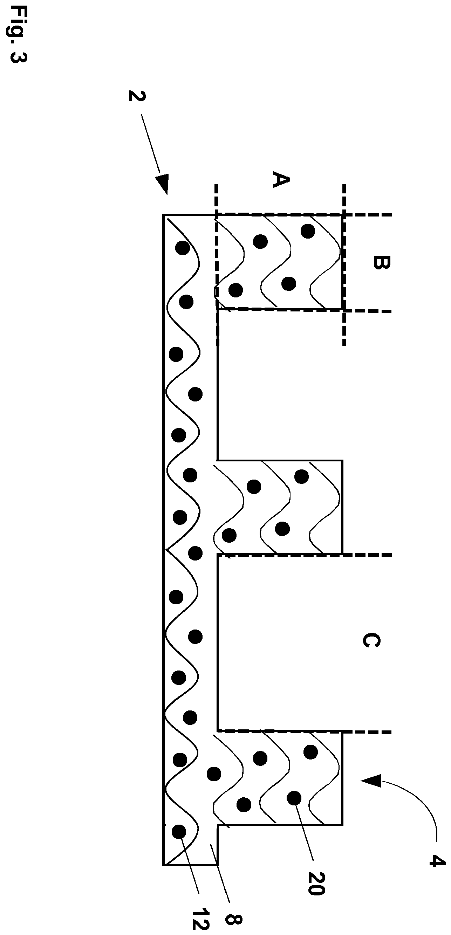

Fig. 3 shows a schematic view of the topside of a tile bonding mat 2 according to the invention in a second embodiment.

As can be seen from Fig. 3, the second embodiment of the tile bonding mat 2 according to the invention comprises a notch pattern located on the top surface of the mat 2 that allows compression of adhesive and full "set/bond" of tile. The notch pattern may be adapted to a structure of a tile underside and may, for example, have a regular notch pattern with a notch height A of preferably 3/8", a notch width B of preferably 1/4" and a spacing C between adjacent notches of preferably 1/2".

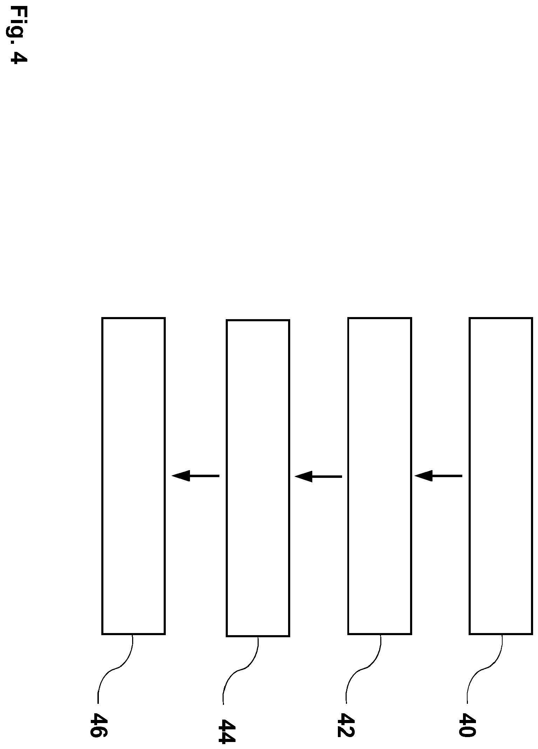

Fig. 4 shows a schematic view of the individual steps of a method of installing tile 20 or stone 20' using a reactivatable tile bonding mat 2 according to the invention.

During step 40 of the method according to the invention, the reactivatable tile bonding mat 2 is placed upon a substantially flat surface. In some cases, the surface is horizontally or vertically oriented.

On the following step 42, stone 22', porcelain or ceramic tile 22 is placed and arranged on the reactivatable tile bonding mat 2 preferably in an aesthetically pleasing fashion.

On the third step 44, induction, or some other method of heat, is applied to the upper surface of the tile 22, to quickly transfer heat through the tile 22, causing a polymer hot-melt material 8 embedded in the reactivatable tile bonding mat 2 to melt and adhere to a lower surface of the tiles 22, forming a strong bond.

Finally, on step 46, upon the tiles 22 fully bonding to the reactivatable tile bonding mat 2, grout may be applied between the sides of the tiles 22. In some cases, the grout may be an epoxy grout or a cementitious grout or the like.

With a view to the rapid and precise laying of tiles 22 or stones 22', the method according to the invention can also comprise the step of applying spacers between the sides of the tile 22 or stone 22' prior to applying heat 44 and/or the step of removing the spacers between the sides of the tile or stone prior to applying grout 46.

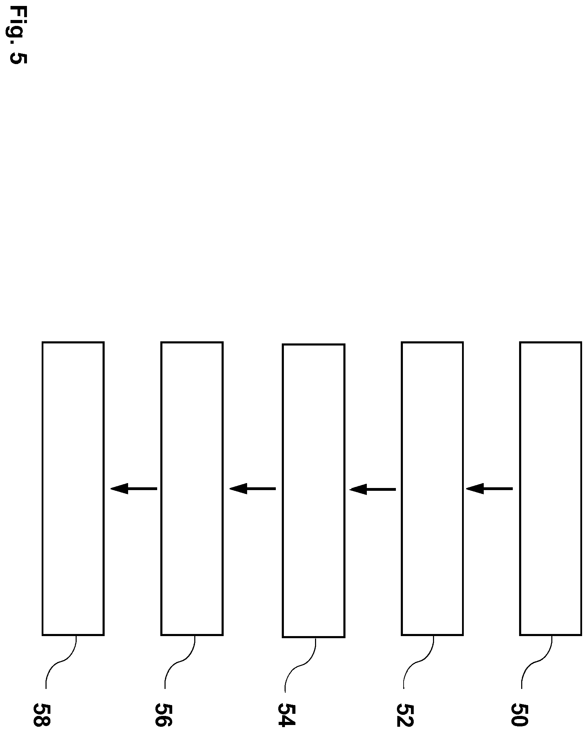

Fig. 5 shows a schematic view of the individual steps of a method for installing, replacing, removing or rearranging tile 22 or stone 22' using a reactivatable tile bonding mat 2 according to the invention.

First on step 50, the grout installed on step 46 (Fig. 1) is removed by any suitable grout removing means.

On the following step 52, due to the polymer hot-melt material 8 being reactivatable, a subsequent application of induction or other heat to the upper surface of the tiles 22 is carried out leading to a softening of the surface of the bonding mat 2 under the tiles 22.

On step 54, the tiles 22 may be removed, rearranged and/or replaced upon the reactivatable tile bonding mat 2, in some cases aided by the use of spacers between the sides of the tiles 22.

On step 56, induction, or some other method of heat, is applied to the upper surfaces of the tiles 22 again in order to activate the polymer hot-melt material 8 again, as described on step 44 (Fig. 1).

On step 58, upon the tiles 22 fully bonding to the reactivatable tile bonding mat 2, spacers may be removed and a suitable grout may be applied between the sides of the tiles 22, as described at step 46 (Fig. 1)

By means of the tile bonding mat 2 in conformity with the invention or by means of the methods in conformity with the invention for setting, installing, removing, replacing and rearranging tiles 22 or stones 22', it is possible, in particular by means of the substitution of cement based thinset in conformity with the invention, to enable tiles 22 or stones 22' to be easily fixed to a substrate 10 in an environmentally friendly and reversible manner.

While various embodiments have been described above, it should be understood that they have been presented by way of example only, and not limitation. The descriptions are not intended to limit the scope of the technology to the particular forms set forth herein. Thus, the breadth and scope of a preferred embodiment should not be limited by any of the above-described exemplary embodiments. It should be understood that the above description is illustrative and not restrictive. To the contrary, the present descriptions are intended to cover such alternatives, modifications, and equivalents as may be included within the spirit and scope of the technology as defined by the appended claims and otherwise appreciated by one of ordinary skill in the art. The scope of the technology should, therefore, be determined not with reference to the above description, but instead should be determined with reference to the appended claims along with their full scope of equivalents.

### Reference list

- 1: system for setting tile or stone
- 2: reactivatable tile bonding mat
- 4: top surface
- 6: botton surface
- 8: hot-melt material
- 10: substrate
- 12: heat receptor
- 14: filler
- 16: notch pattern
- 20: porous material
- 22: tile
- 22': stone
- 24: device
- 26: electric coil

- 40: placing tile bonding mat
- 42: placing tile or stone
- 44: applying heat
- 46: applying grout

- 50: removing grout
- 52: applying heat
- 54: replacing, removing, rearranging tile or stone
- 56: applying heat
- 58: applying grout

- A: hight
- B: width
- C: spacing

## Claims

1. A reactivatable tile bonding mat (2) that requires no cement-based thin-set for installation, the reactivatable tile bonding mat (2) comprising: a top surface (4) and a bottom surface (6), the top surface (4) and the bottom surface (6) including a polymer hot-melt material (8) that is reactivatable after heating and has adhesive and abhesive properties.

2. The reactivatable tile bonding mat (2) according to claim 1,
**characterized in that,**
the adhesive and/or abhesive properties are activated by heat.

3. The reactivatable tile bonding mat (2) according to claim 1 or claim 2,
**characterized in that,**
the adhesive and/or abhesive properties being effective towards at least one of the following substrates (10): concrete, wood, tile (22), and vinyl.

4. The reactivatable tile bonding mat (2) according to one of the preceding claims,
**characterized in that,**
the generation of the heat is controlled by at least one of the following principles: microwave radiation, induction, thermal radiation, and current flow.

5. The reactivatable tile bonding mat (2) according to one of the preceding claims,
**characterized in that,**
the top surface (4) and/or the bottom surface (6) comprises a heat receptor (12).

6. The reactivatable tile bonding mat (2) according to one of the preceding claims,
**characterized in that,**
the heat receptor (12) is embedded in the polymer hot-melt (8), wherein the heat receptor (12) is preferably at least one of magnetite, powdered steel or a steel screen mesh.

7. The reactivatable tile bonding mat (2) according to one of the preceding claims,
**characterized in that,**
the top surface (4) and/or the bottom surface (6) includes a porous material (20), preferably a melt-bonded polyester that is particularly non-woven and has proven dimensional stability.

8. The reactivatable tile bonding mat (2) according to one of the preceding claims,
**characterized in that,**
the reactivatable tile bonding mat (2) further comprises a filler (14) that is preferably arranged between the top surface (4) and the bottom surface (6), in particular, the filler (14) being at least one of calcium carbonate, oragonite, silica, metal flake or glass.

9. The reactivatable tile bonding mat (2) according to one of the preceding claims,
**characterized in that,**
the top surface (4) and/or the bottom surface (6) comprises a hydrophobic material for repelling water.

10. The reactivatable tile bonding mat (2) according to one of the preceding claims,
**characterized in that,**
the top surface (4) and/or the bottom surface (6) further comprises a crack suppressant membrane.

11. The reactivatable tile bonding mat (2) according to one of the preceding claims,
**characterized in that,**
the top surface (4) and/or the bottom surface (6) further comprises a notch pattern (16).

12. A system for setting tile (22) or stone (22'), comprising:
a reactivatable tile bonding mat (2) according to one of the claims 1 to 11 and a device (24) for activating the adhesive and/or abhesive properties of the top surface (4) and/or the bottom surface (6) of the reactivatable tile bonding mat (2).

13. A method of installing tile (22) or stone (22') using a reactivatable tile bonding mat (2) according to one of the claims 1 to 11,
the method comprising:
placing the reactivatable tile bonding mat (2) on a flat surface;
placing the tile (22) or stone (22') on the reactivatable tile bonding mat (2);
applying heat to the tile (22) or stone (22') on the reactivatable tile bonding mat (2);
and applying grout between sides of the tile (22) or stone (22').

14. The method of claim 13,
**characterized in that,**
the method comprises the step of applying spacers between the sides of the tile (22) or stone (22') prior to applying heat and/or the step of removing the spacers between the sides of the tile (22) or stone (22') prior to applying grout.

15. A method for replacing, removing or rearranging tile (22) or stone (22') using a reactivatable tile bonding mat (2) according to one of the claims 1 to 11,
the method comprising:
removing grout between sides of the tile (22) or stone (22');
applying heat to the tile (22) or stone (22') on the reactivatable tile bonding mat (2);
replacing, removing or rearranging the tile (22) or stone (22') on the reactivatable tile bonding mat (2);
applying heat to altered tile (22) or stone (22') on the reactivatable tile bonding mat (2); and
applying grout between sides of the tile (22) or stone (22').
